# EUROPÄISCHE PATENTSCHRIFT

(11) **EP 2 353 709 B1**
(45) Veröffentlichungstag und Bekanntmachung des Hinweises auf die Patenterteilung: **06.07.2016**
(21) Anmeldenummer: 11152543.2
(22) Anmeldetag: 28.01.2011
(51) Int. Cl.: B01J 2/26

(54) **VERFAHREN ZUR BANDKONDITIONIERUNG BEI PASTILLIERANLAGEN UND VORRICHTUNG ZUM HERSTELLEN VON PASTILLEN**
METHOD FOR CONDITIONING THE CONVEYOR BELT OF TABLET PRODUCING DEVICES AND DEVICE FOR PRODUCING TABLETS
PROCÉDÉ DE CONDITIONNEMENT DE UNE BANDE POUR LA FABRICATION DE PASTILLES ET DISPOSITIF DE FABRICATION DE PASTILLES

(30) Priorität: 02.02.2010 DE 102010007390
(43) Veröffentlichungstag der Anmeldung: 10.08.2011
(73) Patentinhaber: Sandvik Materials Technology Deutschland GmbH, 40549 Düsseldorf (DE)
(72) Erfinder: Schromm, Hans-Kurt, 71522 Backnang (DE); Kleinhans, Matthias, 71336 Waiblingen (DE)
(74) Vertreter: Patentanwälte Ruff, Wilhelm, Beier, Dauster & Partner mbB

(56) Entgegenhaltungen:
- DE-A1-102005 054 462
- DE-A1-102007 007 310
- DE-B3-102008 010 351
- US-A- 3 265 779
- US-A- 3 527 647

## Beschreibung

Die Erfindung betrifft ein Verfahren zur Bandkonditionierung bei Pastillieranlagen, wobei ein zu pastillierendes, fließfähiges Produkt mit einem oberhalb eines Kühlbandes drehbar angeordneten, gelochten Außenrohr, das sich um einen feststehenden Innenkörper dreht, tropfenförmig auf einer Oberseite eines unterhalb des Außenrohres angeordneten Kühlbands abgelegt wird und wobei nach der Verfestigung der Produkttropfen die entstandenen Pastillen wieder vom Kühlband abgehoben werden, wobei auf das Kühlband vor dem Ablegen der Produkttropfen ein Trennmittel aufgesprüht wird.

Eine bekannte Vorrichtung zum Herstellen von Pastillen und ein bekanntes Verfahren zur Bandkonditionierung sind aus der deutschen Patentschrift DE 10 2005 054 462 B4 bekannt. Dort ist beschrieben, als Trennmittel eine Waschflüssigkeit, die wenigstens das in Lösung befindliche, zu pastillierende Produkt enthält, mittels einer Waschvorrichtung aufzubringen, wobei als Trennmittel ein trockener Produktfilm auf dem Kühlband dient. Das Trennmittel wird mittels einer Walze auf das Kühlband aufgerollt, wobei die Walze einerseits am Kühlband anliegt und andererseits in ein Behältnis mit flüssigem Trennmittel eintaucht. Überschüssiges Trennmittel wird in diesem Fall mittels einer Abziehvorrichtung entfernt. Problematisch ist bei solchen Vorrichtungen mit Rollen zum Aufbringen des Trennmittels und nachfolgender Abstreiflippe, dass eine schwankende Filmdicke des Trennmittels erzeugt werden kann. Entweder ist dann zu wenig Trennmittel auf dem Kühlband vorhanden, so dass ein Abstreifmesser, mit dem die verfestigten Pastillen vom Kühlband abgenommen werden, großem Verschleiß unterliegt, oder es befindet sich zu viel Trennmittel auf dem Kühlband, so dass die Pastillen verlaufen und sich aus mehreren, zunächst separat abgelegten Produkttropfen Ketten oder allgemein Gruppen bilden. Auch können bei einem solchen Trennmittelüberschuss die Produkttropfen flächig zu sogenannten flakes zerlaufen.

Aus der US-Patentschrift US 3,527,647 ist eine Vorrichtung zur Bildung von Agglomeraten aus einzelnen Partikeln bekannt, bei der Partikel mittels eines Sprühstrahles aus Wasser und Druckluft aus einer Zweistoffdüse in Richtung auf ein umlaufendes Band geblasen werden. Der Sprühstrahl befeuchtet die Partikel und sorgt dafür, dass sich die einzelnen Partikel einander berühren und aufgrund der Befeuchtung Agglomerate bilden.

Aus der deutschen Patentschrift DE 10 2008 010 351 B3 ist eine Vorrichtung zum Pastillieren bekannt, bei der ein flüssiges Medium mittels Sprühdüsen auf den Außenumfang einer gelochten Außentrommel gesprüht wird, die um einen feststehenden Innenkörper gedreht wird und die zum Erzeugen von Produkttropfen vorgesehen ist, wobei die Produkttropfen dann auf einem umlaufenden Kühlband abgelegt werden.

Aus der US-Patentschrift US 3,265,779 ist eine Vorrichtung zum Pastillieren bekannt, bei der stromaufwärts einer Stelle, auf der geschmolzene Produkttropfen auf einem Kühlband abgelegt werden, ein durchgehender Wasserfilm aufgebracht wird. Der Wasserfilm kann mittels einer Rolle oder auch mittels Sprühdüsen aufgetragen werden.

Aus der deutschen Offenlegungsschrift DE 10 2007 007 310 A1 ist eine Vorrichtung zum Pastillieren bekannt, bei der ein Trennmittel stromaufwärts einer Stelle, auf der Produkttropfen auf ein Kühlband abgelegt werden, mittels Sprühdüsen auf das Kühlband aufgesprüht wird.

Mit der Erfindung soll ein Verfahren zur Bandkonditionierung bereitgestellt werden, mit dem sich eine verbesserte Pastillenqualität erzielen lässt.

Erfindungsgemäß ist hierzu ein Verfahren zur Bandkonditionierung bei Pastillieranlagen vorgesehen, wobei ein zu pastillierendes, fließfähiges Produkt mit einem oberhalb eines Kühlbandes drehbar angeordneten, gelochten Außenrohr, das sich um einen feststehenden Innenkörper dreht, tropfenförmig auf einer Oberseite eines unterhalb des Außenrohres angeordneten Kühlbands abgelegt wird und wobei nach der Verfestigung der Produkttropfen die entstandenen Pastillen wieder vom Kühlband abgehoben werden, wobei auf das Kühlband vor dem Ablegen der Produkttropfen ein Trennmittel aufgesprüht wird, bei dem das Trennmittel auf die Oberseite des Kühlbandes mittels wenigstens einer Zweistoffsprühdüse aufgesprüht wird, wobei durch das Aufsprühen des Trennmittels auf dem Kühlband eine hydrophobe Oberfläche erzeugt wird und wobei eine Zeit zwischen dem Aufsprühen des Trennmittels auf einen bestimmten Bereich des Kühlbandes und dem Ablegen der Produkttropfen auf diesen Bereich gerade so lange ist, dass die aufgesprühten Trennmitteltropfen zu einer gleichmäßigen Schicht verlaufen, aber trotz der geringen Schichtdicke nicht schon das Trennmittel in diesem Bereich vollständig verdunstet oder verdampft ist.

Überraschenderweise hat sich gezeigt, dass mittels geeigneter Zweistoffsprühdüsen ein Trennmittel besonders gleichmäßig und in einer durchgehenden Schicht konstanter Dicke auf das Kühlband aufgebracht werden kann. Mittels geeigneter Zweistoffsprühdüsen kann eine ausreichend kleine Tropfengröße und damit gründliche Zerstäubung erreicht werden, so dass das Kühlband gleichmäßig mit Trennmittel versehen wird. Als Trennmittel kann eine wässrige Lösung einer oberflächenaktiven Substanz verwendet werden, die verhindert, dass die hergestellten Pastillen am Kühlband festkleben. Beispielsweise wird beim Pastillieren von Schwefel oder Harnstoff eine Produktschmelze vertropft und als Trennmittel wird eine wässrige oder wasserfreie Lösung oder eine wässrige oder wasserfreie Emulsion auf das Kühlband gesprüht, die dann verhindert, dass die Produktschmelze am Kühlband anhaftet. Die Trennmittelschicht befindet sich dann zwischen den abgelegten Produkttropfen und dem Kühlband und sorgt dafür, dass nach dem Verfestigen der Pastillen diese in einfacher Weise abgenommen werden können. Durch Aufsprühen des Trennmittels lässt sich eine gleichmäßige Pastillenqualität erzielen, die sich unter anderem in einer, einer Kugel angenäherten, hohen Pastillenform zeigt, und die erzeugten Pastillen weisen auch eine höhere Bruchfestigkeit auf. Weiter kann der Staubanteil bei der Herstellung der Pastillen reduziert werden und/oder bei gleichbleibender, hoher Pastillenqualität kann die Produktionsleistung erhöht werden. Durch das Aufsprühen des Trennmittels wird auf dem Kühlband während des Produktionsbetriebes eine "hydrophobe", d.h. eine Schmelze abstoßende Oberfläche erzeugt, auf der die aufgebrachten Produkttropfen nicht verlaufen und sich auch nicht mit der Oberfläche des Kühlbandes verbinden.

Als Zweistoffdüsen werden Düsen bezeichnet, bei denen das zu versprühende Medium, beispielsweise ein flüssiges Trennmittel, mittels eines zweiten Mediums, üblicherweise Druckluft, zerstäubt wird. Zweistoffdüsen können bei hohen Durchsätzen eine sehr feine Zerstäubung im Sinne einer kleinen Tropfengröße bei einer gleichmäßigen Tropfenverteilung über den Sprühkegel erzielen.

In Weiterbildung der Erfindung ist das Kühlband mittels einer im Wesentlichen unterhalb des gelochten Außenrohres angeordneten Umlenktrommel umgelenkt und das Trennmittel wird stromaufwärts des Bereichs, in dem das zu pastillierende Produkt tropfenförmig auf dem Kühlband abgelegt wird, und im Bereich des Umfangs der Umlenktrommel auf das Kühlband aufgesprüht.

Es hat sich herausgestellt, dass auch ein Aufsprühen des Trennmittels in einem Bereich, in dem das Kühlband annähernd senkrecht bzw. stark gekrümmt nach oben verläuft, ein gleichmäßiger Trennmittelfilm aufgebracht werden kann und das aufgesprühte Trennmittel nicht wieder vom Kühlband herunter läuft. Die Sprühdüsen können dadurch so radial außerhalb des Umfangs der Umlenkrollen angeordnet werden, dass sie das Kühlband in einem Bereich besprühen, der annähernd senkrecht verläuft oder wenigstens in einem steil ansteigenden Winkel verläuft. Unmittelbar oberhalb der Umlenkrolle ist üblicherweise das gelochte Außenrohr angeordnet, mittels dem dann die Produkttropfen auf dem Kühlband abgelegt werden. Die Verwendung von Sprühdüsen und speziell Zweistoffsprühdüsen ermöglicht es daher, das Trennmittel erst kurz vor dem Aufbringen der Produkttropfen aufzusprühen, insbesondere etwa eine Vierteldrehung der Umlenkrolle bevor die Produkttropfen auf dem Kühlband abgelegt werden.

In Weiterbildung der Erfindung wird das Kühlband stromaufwärts des Bereichs, in dem das Trennmittel aufgesprüht wird, gereinigt.

Eine solche Reinigung kann beispielsweise durch Aufrollen einer Waschflüssigkeit und nachfolgendes Abziehen des aufgerollten Flüssigkeitsfilms erfolgen. Es lässt sich nicht vermeiden, dass beim Abnehmen der Pastillen kleinste Produktreste am Kühlband anhaften bleiben, die dann vor dem Aufsprühen des Trennmittels wieder entfernt werden müssen.

In Weiterbildung der Erfindung wird das Kühlband stromaufwärts des Bereichs, in dem das Trennmittel aufgesprüht wird, abgewaschen und abgezogen.

Gemäß der Erfindung wird das Trennmittel mittels wenigstens einer Sprühdüse auf einen Außenumfang der gelochten Außentrommel aufgesprüht.

Auch bei der gelochten Außentrommel selbst kann das Aufsprühen eines Trennmittels von erheblichem Vorteil sein, da dadurch eine Benetzung des Außenumfangs des gelochten Außenrohres mit dem zu vertropfenden Produkt, insbesondere eine Schwefelschmelze oder Harnstoffschmelze, vermieden wird. Bei Vorrichtungen nach dem Stand der Technik noch erforderliche Einweiser, die ein auf die Außenseite der gelochten Trommel gelangte Produktreste wieder in deren Öffnungen hineindrücken, können dadurch entlastet werden oder sogar vollständig entfallen. Dadurch wird die verschleißanfällige Einweiservorrichtung überflüssig.

In Weiterbildung der Erfindung ist vorgesehen, dass die auf dem Kühlband abgelegten Produkttropfen mit Wasser besprüht werden.

Durch Besprühen der aufgebrachten Produkttropfen mit Wasser wird zum einen eine eventuelle statische elektrische Aufladung der Pastillen beim Abnehmen vermieden. Darüber hinaus kann die aufgebrachte Wassermenge, vorzugsweise reines Wasser, so dosiert werden, dass ein Zusatzkühleffekt der abgelegten Produkttropfen erzielt wird. Die abgelegten Produkttropfen können durch das aufgesprühte Wasser von zwei Seiten gekühlt werden, nämlich zum einen von der auf der Oberseite des Kühlbandes aufliegenden Seite und von der gegenüberliegenden, mit Wasser besprühten Seite. Dadurch lässt sich eine Verbesserung der Pastillenqualität hinsichtlich einer glatten Oberfläche und einer Vermeidung von Schwindungsrissen erzielen. Vorteilhafterweise wird eine Wassermenge, Tropfengröße und Wassertemperatur des versprühten Wassers so eingestellt, dass eine Oberflächenkühlung der auf dem Kühlband abgelegten Produkttropfen erzielt wird.

In Weiterbildung der Erfindung wird das Wasser auf die auf dem Kühlband abgelegten Produkttropfen zu einem Zeitpunkt aufgesprüht, zu dem ein dem Kühlband abgewandter, oberer Bereich der Produkttropfen sich noch im fließfähigen Zustand befindet.

Auf diese Weise kann erreicht werden, dass sich eine zweite Erstarrungsfront innerhalb des Produkttropfens ausbildet, die dann von oben nach unten läuft. Indem also die Erstarrung der Produkttropfen dann von zwei Seiten her erfolgt, kann die Pastillenqualität verbessert werden und insbesondere werden Schwindungsrisse in der Oberfläche vermieden.

Eine Vorrichtung zum Durchführen des erfindungsgemäßen Verfahrens ist mit einem oberhalb eines Kühlbandes drehbar angeordneten, gelochten Außenrohr, das sich um einen feststehenden Innenkörper dreht, sowie einem unterhalb des Außenrohres angeordneten Kühlband versehen, wobei ein zu pastillierendes, fließfähiges Produkt mittels des Außenrohres tropfenförmig auf einer Oberseite des Kühlbandes abgelegt wird und nach der Verfestigung der Produkttropfen die entstandenen Pastillen wieder vom Kühlband abgehoben werden, wobei Mittel zum Aufbringen eines Trennmittels auf das Kühlband vorgesehen sind und wobei wenigstens eine Sprühdüse zum Aufsprühen des Trennmittels auf die Oberseite des Kühlbandes vorgesehen ist.

Durch Vorsehen einer Sprühdüse zum Aufsprühen des Trennmittels kann eine sehr gleichmäßige Beschichtung des Kühlbandes mit Trennmittel erreicht werden und das Trennmittel kann zum einen sparsam eingesetzt werden und zum anderen wird eine verbesserte Pastillenqualität durch eine auch über die Zeit sowie über die Breite des Kühlbandes gesehen konstante Trennmittelschichtdicke erzielt.

Die Sprühdüse ist als Zweistoffdüse ausgebildet.

Durch Vorsehen einer Zweistoffdüse lassen sich die erforderlichen Schichtdicken und Mengen an Trennmittel gleichmäßig aufbringen, auch bei sehr hohen Geschwindigkeiten des Kühlbandes.

Das Kühlband ist mittels einer im wesentlichen unterhalb des gelochten Außenrohres angeordneten Umlenktrommel umgelenkt, und die wenigstens eine Sprühdüse ist stromaufwärts des Bereichs, in dem das zu pastillierende Produkt tropfenförmig auf dem Kühlband abgelegt wird, und im Bereich des Umfangs der Umlenktrommel angeordnet.

Überraschenderweise kann das Aufsprühen des Trennmittels in einem Bereich erfolgen, in dem das Kühlband annähernd senkrecht nach oben, zumindest aber in einem steil ansteigenden Winkel verläuft, ohne dass zu befürchten wäre, dass das Trennmittel ungleichmäßig auf dem Kühlband verläuft. Die Sprühdüsen können dadurch platzsparend und von der gelochten Außentrommel entfernt angeordnet werden. Es ist gleichzeitig aber auch möglich, das Trennmittel erst kurz vor dem Ablegen der Produkttropfen aufzubringen, so dass auch bei sehr geringer Schichtdicke noch keine trockenen Stellen auf dem Kühlband zu befürchten sind, auf denen das Trennmittel bereits verdunstet ist. Dies ermöglicht es wiederum, nur eine sehr dünne Trennmittelschicht aufzusprühen.

Eine Reinigungsvorrichtung für das Kühlband ist stromaufwärts des Bereichs, in dem das Trennmittel aufgesprüht wird, angeordnet.

Auf diese Weise kann das Kühlband von Rückständen gereinigt werden, bevor Trennmittel aufgesprüht wird.

Wenigstens eine Sprühdüse zum Aufsprühen des Trennmittels ist auf einen Außenumfang der gelochten Außentrommel vorgesehen.

Auch das Aufsprühen eines Trennmittels auf den Außenumfang der gelochten Außentrommel, unabhängig davon, ob das Trennmittel auch auf das Kühlband aufgesprüht wird, hat sich überraschenderweise als äußerst vorteilhaft herausgestellt. Durch Aufsprühen des Trennmittels wird verhindert, dass die durch die Öffnungen der gelochten Außentrommel austretende Produktschmelze, insbesondere eine Schwefelschmelze oder Harnstoffschmelze, an dem Außenumfang der Außentrommel haften bleibt. Beim Stand der Technik erforderliche Einweiser, um solches auf dem Außenumfang der Außentrommel haftende Produktmaterial wieder in die Öffnungen hineinzudrücken, kann dadurch entfallen.

Wenigstens eine weitere Sprühdüse ist oberhalb des Kühlbandes zum Besprühen der auf dem Kühlband abgelegten Produkttropfen mit Wasser vorgesehen.

Mittels wenigstens einer weiteren Sprühdüse zum Versprühen von Wasser, insbesondere reinem Wasser, kann ein zusätzlicher Kühleffekt der abgelegten Produkttropfen erreicht werden und eine statische Aufladung der Pastillen beim Abnehmen vom Kühlband kann vermieden werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen.

In den Zeichnungen zeigen:
- Fig. 1: eine schematische Darstellung einer erfindungsgemäßen Vorrichtung zum Herstellen von Pastillen und
- Fig. 2: eine vergrößerte, abschnittsweise Darstellung der Vorrichtung der Fig. 1 und eines mit dieser Vorrichtung erzeugten Produkttropfens.

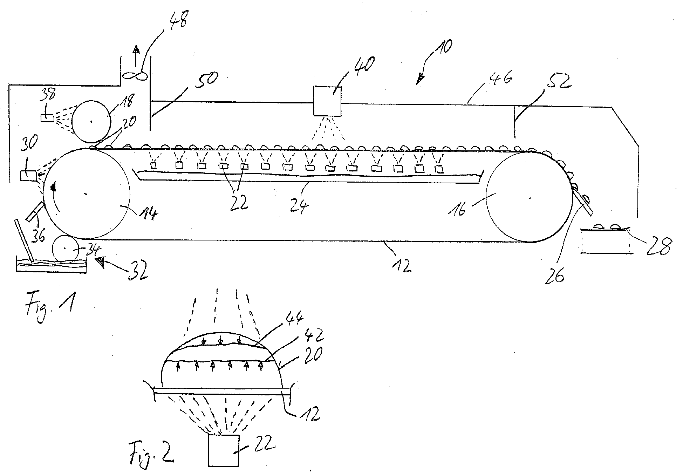

Die in Fig. 1 dargestellte Vorrichtung 10 zum Herstellen von Pastillen weist ein umlaufendes Kühlband 12 auf, insbesondere ein Stahlband. Das Kühlband 12 ist um zwei Umlenktrommeln 14, 16 umgelenkt, wobei sich die Umlenktrommeln 14, 16 jeweils im Uhrzeigersinn drehen können. Auf einer Oberseite eines Obertrums des Kühlbandes 12 werden mittels einer rotierenden, gelochten Außentrommel 18 Produkttropfen 20 abgelegt. Diese Produkttropfen bestehen aus einem fließfähigen, zu pastillierenden Produkt. Beispielsweise rotiert die gelochte Außentrommel 18 um einen nicht dargestellten, feststehenden Innenkörper, durch den eine Schwefelschmelze oder Harnstoffschmelze befördert wird, die dann in Form der Produkttropfen 20 auf dem Kühlband 12 abgelegt wird. Das Kühlband 12 wird fortlaufend bewegt, so dass die unterhalb der gelochten Außentrommel 18 abgelegten Produkttropfen 20 in der Darstellung der Fig. 1 nach rechts bewegt werden. Das Kühlband 12 wird auf der Unterseite des Obertrums mittels Sprühdüsen 22 gekühlt, die oberhalb einer Auffangwanne 24 angeordnet sind. Die Kühlung des Kühlbandes 12 von seiner Unterseite her bewirkt eine allmähliche Verfestigung der Produkttropfen 20 auf dem Kühlband während des Transports. Im Bereich der in der Darstellung der Fig. 1 rechten Umlenktrommeln 16 werden die verfestigten Pastillen dann mittels eines Abnahmemesser 26 vom Kühlband 12 abgenommen, auf ein Transportband 28 weitergeleitet und dann abtransportiert.

Um ein Anhaften der Produkttropfen 20 bzw. der verfestigten Pastillen auf dem Kühlband 12 zu verhindern, wird mittels einer Sprühdüse 30 ein Trennmittel auf die Außenseite des Kühlbandes 12 aufgesprüht. Das Trennmittel kann dabei als wässrige Lösung oder wässrige Emulsion oder auch als wasserfreie Lösung oder wasserfreie Emulsion ausgebildet sein. Das Trennmittel ist eine wässrige Lösung oder Emulsion oder wasserfreie Lösung oder Emulsion einer oberflächenaktiven Substanz zur Verhinderung eines Anhaftens der Produkttropfen 20 auf der Oberseite des Kühlbandes, speziell der Schwefelschmelze oder Harnstoffschmelze. Durch Aufsprühen des Trennmittels wird auf der Oberseite des Kühlbandes 12 eine "hydrophobe", d.h. Schmelze abstoßende Oberfläche erzeugt, die zum einen einen unmittelbaren Kontakt der Produkttropfen 20 mit dem Kühlband 12 verhindert und auch verhindert, dass die Produkttropfen 20 auf dem Kühlband 12 auseinanderlaufen.

Die Sprühdüse 30 ist dabei stromaufwärts des Bereichs angeordnet, in dem die Produkttropfen 20 mittels der gelochten Außentrommel 18 auf dem Kühlband 12 abgelegt werden. Die Sprühdüse 30 ist auch im Bereich des Umfangs der Umlenktrommel 14 angeordnet, die etwa unterhalb der gelochten Außentrommel 18 angeordnet ist. Die Sprühdüse 30 ist selbstverständlich radial außerhalb des Außenumfanges der Umlenktrommel 14 angeordnet und sprüht das Trennmittel auf das Kühlband 12 in einem Bereich auf, in dem das Kühlband annähernd vertikal nach oben bzw. in einem steilen Winkel nach oben geführt wird. Das Trennmittel wird mittels der Sprühdüse 30 etwa eine Viertelumdrehung der Umlenktrommel 14 vor dem Bereich aufgesprüht, in dem die Produkttropfen 20 auf dem Kühlband 12 abgelegt werden. Zwischen dem Aufsprühen des Trennmittel und dem Ablegen der Produkttropfen 20 legt das Kühlband 12 dadurch nur eine vergleichsweise geringe Strecke zurück bzw. ist nur eine vergleichsweise kurze Zeit unterwegs. Diese kurze Zeit reicht aus, damit die aufgesprühten Trennmitteltropfen zu einer gleichmäßigen Schicht verlaufen, sie ist aber kurz genug, so dass trotz einer sehr geringen Schichtdicke des Trennmittels nicht schon das Trennmittel in Bereichen vollständig verdunstet oder verdampft. Aufgrund des geringen Platzbedarfs der Sprühdüse 30 bzw. mehrerer Sprühdüsen 30 kann das Trennmittel erst kurz vor dem Bereich, in dem die Produkttropfen 20 auf dem Kühlband 12 abgelegt werden, aufgesprüht werden.

Die wenigstens eine Sprühdüse 30 ist als Zweistoffdüse ausgebildet und das flüssige Trennmittel wird unter Zuhilfenahme von Druckluft fein zerstäubt.

Stromaufwärts der Sprühdüse 30 ist eine Reinigungsvorrichtung 32 vorgesehen, mit der das Kühlband 12 von noch eventuell anhaftenden Produktresten gesäubert wird. Die Reinigungsvorrichtung 32 weist eine Rolle 34 auf, die einerseits an dem Kühlband 12 anliegt und andererseits abschnittsweise in ein Becken mit Reinigungsflüssigkeit eingetaucht ist. Mittels der Rolle 34 wird dadurch ein Film aus Reinigungsflüssigkeit auf das Kühlband 12 aufgebracht. Dieser Film an Reinigungsflüssigkeit wird dann mittels einer Abziehlippe 36 wieder abgezogen, so dass stromabwärts der Abziehlippe 36 das Kühlband 12 gereinigt ist und Trennmittel aufgesprüht werden kann.

Wenigstens eine weitere Sprühdüse 38 ist radial außerhalb des Umfangs der gelochten Außentrommel 18 vorgesehen und sprüht Trennmittel auf den Außenumfang der gelochten Außentrommel 18. Mittels des aufgesprühten Trennmittels wird eine "hydrophobe", d.h. Schmelze abstoßende Oberfläche auf der gelochten Außentrommel 18 erzeugt, die verhindert, dass die durch die Löcher der Außentrommel 18 hindurch gedrückte Produktschmelze die Außenfläche benetzt. Überraschenderweise lässt sich durch Besprühen der Außentrommel 18 mit Trennmittel erreichen, dass auf einen bei konventionellen Vorrichtungen erforderlichen Einweiser verzichtet werden kann, der dazu dient, nach dem Ablegen der Produkttropfen 20 noch auf der Außenfläche anhaftende Produktschmelze wieder in die Öffnungen in der Außentrommel 18 zurückzudrücken.

Oberhalb des Obertrums des Kühlbandes 12 ist eine dritte Sprühdüse, 40 vorgesehen, mit der reines Wasser auf die Produkttropfen 20 gesprüht wird. Durch das Besprühen mit Wasser wird eine statische Aufladung der Produkttropfen 20 vermieden, insbesondere beim Abnehmen mit dem Abnahmemesser 26. Die Wassermenge, die mittels der Sprühdüse 40 aufgesprüht wird, kann darüber hinaus so bemessen sein, dass die Produkttropfen 20 beim Abnehmen die gewünschte Wassermenge enthalten. Weiter kann mittels der Sprühdüse 40 und dem aufgesprühten Wasser ein Kühleffekt der Produkttropfen 20 erreicht werden.

Die Wirkung des mittels der Sprühdüse 40 aufgesprühten Wassers ist in der Darstellung der Fig. 2 schematisch angedeutet. Ein Produkttropfen 20 liegt auf dem abschnittsweise dargestellten Kühlband 12 auf, das von der Unterseite her mittels Sprühdüsen 22 mit Kühlwasser besprüht und dadurch auf konstanter Temperatur gehalten wird. Gleichzeitig werden die Produkttropfen 20 von oben her durch die Sprühdüse 40 mit reinem Wasser besprüht. Dies führt dazu, dass die Produkttropfen 20 sowohl von unten, also vom Kühlband 12 her, als auch von oben her gekühlt werden. Dadurch bilden sich innerhalb des Produkttropfen 20 zwei Erstarrungsfronten 42, 44 aus, die aufeinander zulaufen. Der Verfestigungsprozess des Produkttropfens 20 kann dadurch gleichmäßiger ablaufen und insbesondere werden die beim Einsatz von konventionellen Vorrichtungen und Verfahren zum Herstellen von Pastillen zu beobachtenden Schwindungsrisse auf der Oberseite des Produkttropfens 20 bzw. der fertig gestellten Pastillen vermieden.

Anhand der Fig. 1 ist noch zu erkennen, dass die Vorrichtung 10 mit einer Haube 46 versehen ist, die sich im Wesentlichen über die gesamte Vorrichtung erstreckt. Luft innerhalb der Haube 46 wird mittels eines Gebläses 48 abgesaugt. Schottwände 50, 52 der Haube 46 verhindern, dass einerseits Reste des versprühten Trennmittels sich von oben auf den Produkttropfen 20 niederschlagen und auch, dass sich ein Wassernebel ausgehend von der Sprühdüse 40 in den Bereich der gelochten Außentrommel 18 oder in den Bereich des Abnahmemessers 26 und des Transportbandes 28 bewegt.

## Patentansprüche

1. Verfahren zur Bandkonditionierung bei Pastillieranlagen, wobei ein zu pastillierendes, fließfähiges Produkt tropfenförmig auf einer Oberseite eines Kühlbands (12) abgelegt wird, wobei nach der Verfestigung der Produkttropfen (20) die entstandenen Pastillen wieder vom Kühlband (12) abgehoben werden und wobei auf das Kühlband (12) vor dem Ablegen der Produkttropfen (20) ein Trennmittel aufgesprüht wird, **dadurch gekennzeichnet, dass** das fließfähige Produkt mit einem oberhalb eines Kühlbandes (12) drehbar angeordneten, gelochten Außenrohr (18), das sich um einen feststehenden Innenkörper dreht auf dem unterhalb des Außenrohres (18) angeordneten Kühlband (12) abgelegt wird, dass das Trennmittel auf die Oberseite des Kühlbandes (12) mittels wenigstens einer Zweistoffsprühdüse (30) in Form einer sehr dünnen Trennmittelschicht aufgesprüht wird, wobei das Trennmittel flüssig ist und mittels Druckluft fein zerstäubt wird, wobei das Trennmittel eine wässrige Lösung oder Emulsion oder wasserfreie Lösung oder Emulsion einer oberflächenaktiven Substanz ist, wobei durch das Aufsprühen des Trennmittels auf dem Kühlband (12) eine Schmelze abstoßende Oberfläche erzeugt wird und wobei eine Zeit zwischen dem Aufsprühen des Trennmittels auf einen bestimmten Bereich des Kühlbandes und dem Ablegen der Produkttropfen auf diesen Bereich gerade so lange ist, dass die aufgesprühten Trennmitteltropfen zu einer gleichmäßigen Schicht verlaufen, aber trotz der sehr geringen Schichtdicke nicht schon das Trennmittel in diesem Bereich vollständig verdunstet oder verdampft ist.

2. Verfahren nach Anspruch 1, **dadurch gekennzeichnet, dass** das Trennmittel mittels der wenigstens einen Zweistoffdüse in einem Bereich aufgesprüht wird, in dem das Kühlband annähernd senkrecht oder wenigstens in einem steil ansteigenden Winkel verläuft.

3. Verfahren nach Anspruch 1 oder 2, wobei das Kühlband (12) mittels einer im wesentlichen unterhalb des gelochten Aussenrohres angeordneten Umlenktrommel (14) umgelenkt ist, **dadurch gekennzeichnet, dass** das Trennmittel stromaufwärts des Bereichs, in dem das zu pastillierende Produkt tropfenförmig auf dem Kühlband (12) abgelegt wird, und im Bereich des Umfangs der Umlenktrommel (14) auf das Kühlband (12) aufgesprüht wird.

4. Verfahren nach einem der vorstehenden Ansprüche, **gekennzeichnet durch** Reinigen des Kühlbandes (12) stromaufwärts des Bereichs, in dem das Trennmittel aufgesprüht wird.

5. Verfahren nach Anspruch 4, **gekennzeichnet durch** Reinigen mittels Abwaschen und Abziehen des Kühlbandes (12) stromaufwärts des Bereichs, in dem das Trennmittel aufgesprüht wird.

6. Verfahren, insbesondere nach einem der vorstehenden Ansprüche, **dadurch gekennzeichnet, dass** das Trennmittel mittels wenigstens einer Sprühdüse (38) auf einen Außenumfang der gelochten Außentrommel (18) aufgesprüht wird.

7. Verfahren nach einem der vorstehenden Ansprüche, **dadurch gekennzeichnet, dass** die auf dem Kühlband (12) abgelegten Produkttropfen (20) mit Wasser besprüht werden.

8. Verfahren nach Anspruch 7, **dadurch gekennzeichnet, dass** eine Wassermenge, Tropfengröße des versprühten Wassers und Wassertemperatur so eingestellt wird, dass eine Oberflächenkühlung der auf dem Kühlband (12) abgelegten Produkttropfen (20) erzielt wird.

9. Verfahren nach Anspruch 7 oder 8, **dadurch gekennzeichnet, dass** das Wasser auf die auf dem Kühlband (12) abgelegten Produkttropfen (20) zu einem Zeitpunkt aufgesprüht wird, zu dem ein dem Kühlband (12) abgewandter oberer Bereich der Produkttropfen (20) sich noch im fließfähigen Zustand befindet.

## Claims

1. A method for belt conditioning in a pastillation system, wherein a free-flowing product to be pastillated is deposited in the form of drops on a top surface of a cooling belt (12), wherein the pastilles resulting from solidification of the drops of product (20) are removed from said cooling belt (12), and wherein a release agent is sprayed onto said cooling belt (12) before the drops of product (20) are deposited, **characterized in that** said free-flowing product is deposited, using a perforated outer shell (18), mounted above a cooling belt (12) for rotation about a stationary internal body, on said cooling belt (12) disposed below said outer shell (18), **in that** said release agent is sprayed onto the top surface of said cooling belt (12) by means of at least one two-substance spray nozzle (30) in the form of a very small release agent layer thickness, wherein the release agent is liquid and finely atomized by means of compressed air, wherein the release agent is an aqueous solution or emulsion or an anhydrous solution or emulsion of a surface-active agent, wherein by spraying the release agent onto said cooling belt (12) a melt repellent surface is produced, and wherein a period of time between spraying the release agent on a certain area of said cooling belt and depositing the drops of product on said area is just sufficiently long for the sprayed drops of release agent to spread out to form a uniform layer, but sufficiently short to ensure that despite the very small layer thickness there is no total volatilization or evaporation of the release agent in said area.

2. The method according to claim 1, **characterized in that** said release agent is sprayed by means of said at least one two-substance nozzle on a region of the cooling belt in which the cooling belt extends approximately vertically upward upwardly or at least at a steep upward angle.

3. The method according to claim 1 or 2, wherein said cooling belt (12) is deflected by means of a return drum (14) disposed substantially beneath the perforated outer shell, **characterized in that** said release agent is sprayed onto said cooling belt (12) upstream of the region in which the product to be pastillated is deposited in the form of drops on said cooling belt (12) and in the region of the perimeter of said return drum (14).

4. The method according to any one of the preceding claims, **characterized by** cleaning of said cooling belt (12) upstream of the region in which said release agent is sprayed onto said cooling belt.

5. The method according to claim 4, **characterized by** cleaning using washing and stripping said cooling belt (12) upstream of the region in which the release agent is sprayed onto said cooling belt.

6. The method, particularly according to any one of the preceding claims, **characterized in that** said release agent is sprayed onto an outer perimeter of said perforated outer shell (18) by means of at least one spray nozzle (38).

7. The method according to any one of the preceding claims, **characterized in that** water is sprayed onto the drops of product (20) deposited on the cooling belt (12).

8. The method according to claim 7, **characterized in that** the amount of water, the droplet size of the sprayed water, and the water temperature are adjusted such that said drops of product (20) deposited on the cooling belt (12) undergo surface cooling.

9. The method according to claim 7 or 8, **characterized in that** the water is sprayed onto the drops of product (20) deposited on said cooling belt (12) at a time at which an upper region of the drops of product (20) that is remote from said cooling belt (12) is still in a free-flowing state.

## Revendications

1. Procédé de conditionnement en bande sur des installations de formation de pastilles, dans lequel un produit fluide à transformer en pastilles est déposé goutte à goutte sur la face supérieure d'une bande de refroidissement (12), les pastilles obtenues après solidification des gouttes (20) de produit sont retirées de la bande de refroidissement (12) et un agent de séparation est pulvérisé sur la bande de refroidissement (12) avant le dépôt des gouttes (20) de produit, **caractérisé en ce que** à l'aide d'un tube extérieur perforé (18) disposé à rotation au-dessus d'une bande de refroidissement (12) et tournant autour d'un corps intérieur fixe, le produit fluide est déposé sur la bande de refroidissement (12) disposée en dessous du tube extérieur (18), **en ce qu'**au moyen d'au moins une tuyère (30) de pulvérisation à deux matières, l'agent de séparation est pulvérisé sous la forme d'une couche très mince d'agent de séparation sur la face supérieure de la bande de refroidissement (12), **en ce que** l'agent de séparation est liquide et est pulvérisé finement au moyen d'air comprimé, **en ce que** l'agent de séparation est une solution aqueuse, une émulsion aqueuse, une solution anhydre ou une émulsion anhydre d'une substance tensioactive, **en ce que** la pulvérisation de l'agent de séparation sur la bande de refroidissement (12) forme une surface répulsive pour les liquides, **en ce que** la durée qui s'écoule entre la pulvérisation de l'agent de séparation sur une partie définie de la bande de refroidissement et le dépôt des gouttes de produit sur cette partie est suffisamment longue pour que les gouttes d'agent de séparation pulvérisées s'étalent en une couche régulière mais que l'agent de séparation ne s'évapore pas ou ne se volatilise pas complètement dans cette zone malgré que l'épaisseur de la couche soit très petite.

2. Procédé selon la revendication 1, **caractérisé en ce que** l'agent de séparation est pulvérisé au moyen d'au moins une tuyère à deux matières dans une zone dans laquelle la bande de refroidissement s'étend sensiblement à la perpendiculaire ou au moins sous un angle montant fortement.

3. Procédé selon les revendications 1 ou 2, dans lequel la bande de refroidissement (12) est déviée au moyen d'un tambour de renvoi (14) disposé essentiellement en dessous du tube extérieur perforé, **caractérisé en ce que** l'agent de séparation est pulvérisé sur la bande de refroidissement (12) en amont de la zone dans laquelle le produit à transformer en pastilles est déposé goutte à goutte sur la bande de refroidissement (12) et au niveau du début du tambour de renvoi (14).

4. Procédé selon l'une des revendications précédentes, **caractérisé par** le nettoyage de la bande de refroidissement (12) en amont de la zone dans laquelle l'agent de séparation est pulvérisé.

5. Procédé selon la revendication 4, **caractérisé par** le nettoyage par lavage et extraction de la bande de refroidissement (12) en amont de la zone dans laquelle l'agent de séparation est pulvérisé.

6. Procédé, en particulier selon l'une des revendications précédentes, **caractérisé en ce que** l'agent de séparation est pulvérisé sur la périphérie extérieure du tambour extérieur perforé (18) au moyen d'au moins une tuyère de pulvérisation (38).

7. Procédé selon l'une des revendications précédentes, **caractérisé en ce que** l'eau est pulvérisée sur les gouttes (20) de produit déposées sur la bande de refroidissement (12).

8. Procédé selon la revendication 7, **caractérisé en ce qu'**une quantité d'eau, la taille des gouttes de l'eau pulvérisée et la température de l'eau sont réglées de manière à obtenir un refroidissement de surface des gouttes (20) de produit déposées sur la bande de refroidissement (12).

9. Procédé selon les revendications 7 ou 8, **caractérisé en ce que** l'eau est pulvérisée sur les gouttes (20) de produit déposées sur la bande de refroidissement (12) à un instant auquel le partie supérieure des gouttes (20) de produit non tournée vers la bande de refroidissement (12) est encore à l'état liquide.
